# FASCICULE DE BREVET EUROPEEN

(11) **EP 4 078 268 B1**
(45) Date de publication et mention de la délivrance du brevet: **27.11.2024**
(21) Numéro de dépôt: 20829926.3
(22) Date de dépôt: 18.12.2020
(51) Int. Cl.: G02B 27/00

(54) **JOINT DE PROTECTION**
SCHUTZDICHTUNG
PROTECTIVE SEAL

(30) Priorité: 19.12.2019 FR 1914822
(43) Date de publication de la demande: 26.10.2022
(73) Titulaire: LATELEC, 31500 Toulouse (FR)
(72) Inventeur: DELAME-QUENTIN, Cyrille, 31460 Toutens (FR)
(74) Mandataire: Ipside
(86) Numéro de dépôt international: PCT/EP2020/087047
(87) Numéro de publication internationale: WO 2021/123187

(56) Documents cités:
- EP-A1- 2 574 271
- WO-A2-2006/088858
- US-A1- 2009 109 424

## Description

### Domaine technique de l'invention

L'invention concerne un joint de protection.

L'invention est notamment destinée à protéger des éléments de la poussière, notamment lorsqu'ils sont inutilisés. Elle s'applique plus particulièrement, bien que non limitativement, à la protection d'éléments optiques.

### Technique antérieure

Les éléments optiques, tels que par exemple les lentilles, les objectifs dans un instrument d'optique (appareil photo, télescope, microscope), les sources lumineuses, les photodétecteurs, sont des éléments très sensibles aux poussières et autres impuretés.

De manière générale, ces éléments, lorsqu'ils ne sont pas en utilisation, sont placés dans des boitiers hermétiques ou bien protégés par des capuchons de protection rigides amovibles. Ces capuchons de protection sont destinés à être retirés avant utilisation. Or, le temps de retirer le capuchon de protection et d'installer l'élément optique en position d'utilisation, ces éléments optiques peuvent être à nouveau soumis à la poussière. Par ailleurs, les capuchons de protection peuvent être perdus ou oubliés. Le document EP2574271 A1 décrit un joint de protection.

### Présentation de l'invention

La présente invention vise à remédier aux inconvénients précités.

A cet effet, il est proposé par la présente invention un joint de protection se présentant sous la forme d'un corps creux comprenant une première paroi, une deuxième paroi, opposée à la première paroi, et un tronçon entre la première paroi et la deuxième paroi. La première paroi comporte une ouverture. La deuxième paroi comporte au moins une fente. Le joint de protection est configuré pour passer, lorsqu'une force est exercée sur la deuxième paroi, dans une direction perpendiculaire à ladite deuxième paroi, d'une position de repos, dans laquelle la au moins une fente est fermée, à une position contrainte dans laquelle la au moins une fente est déformée, dégageant une ouverture dans la deuxième paroi.

De préférence, la première paroi, présente une forme générale plane. La deuxième paroi présente une forme générale plane.

Par forme générale plane ou sensiblement plane, on entend préférentiellement une paroi présentant une épaisseur constante.

La première paroi est avantageusement destinée à venir se positionner contre un support d'un élément que l'on souhaite protéger des poussières. La première paroi est avantageusement destinée à être agencée de telle sorte que l'élément à protéger est disposé en vis-à-vis ou dans l'ouverture de la première paroi.

Ainsi, lorsque le joint de protection est positionné autour de l'élément, il agit, lorsqu'il est en position de repos, comme un capuchon de protection vis-à-vis de la poussière. La deuxième paroi du joint de protection étant obturée lorsqu'il est en position de repos, le joint de protection devient hermétique à l'introduction, par cette deuxième paroi des poussières. Le corps creux formant le joint de protection délimite ainsi une chambre étanche aux poussières.

Par une simple application d'une force, dans une direction perpendiculaire à la deuxième paroi, la deuxième paroi s'étire dans son plan, ce qui permet de déformer la au moins une fente et de créer un orifice dans la deuxième paroi.

Ainsi, lorsque le joint de protection est positionné autour de l'élément et en position contrainte, le joint de protection n'agit plus comme un capuchon de protection et l'élément peut être utilisé.

La force peut être appliquée par exemple manuellement ou par une action mécanique.

Un tel joint de protection a avantageusement pour vocation de rester en place autour de l'élément, même lorsque celui-ci est en cours d'utilisation.

Un tel joint de protection est avantageusement destiné à protéger des éléments optiques, tels que des lentilles, des sources lumineuses ou encore des photodétecteurs. Ce joint de protection peut également être destiné à protéger des éléments non optiques, tels que par exemple des buses à jet d'encre.

Dans des modes particuliers de réalisation, l'invention répond en outre aux caractéristiques suivantes, mises en oeuvre séparément ou en chacune de leurs combinaisons techniquement opérantes.

Dans des modes particuliers de réalisation de l'invention, le corps creux formant le joint de protection est réalisé dans un matériau élastique.

Dans un exemple préféré de réalisation, le matériau élastique est un élastomère. Un tel matériau en élastomère est avantageux car il permet au joint de protection de se déformer élastiquement, tout en restant dans le domaine élastique.

Dans d'autres exemples de réalisation, le matériau élastique peut être un silicone, un matériau composite ou encore un matériau métallique. Tout autre type de matériau capable de se déformer, tout en restant dans le domaine élastique, peut être utilisé.

Dans des modes particuliers de réalisation de l'invention, ledit joint de protection est configuré pour revenir en position de repos lorsque la force n'est plus exercée sur la deuxième paroi. Ainsi, dès que l'élément n'est plus en cours d'utilisation, la force sur la deuxième paroi est retirée, la deuxième paroi revient à sa forme initiale, avec sa au moins une fente refermée, et le joint de protection revient naturellement hermétique aux poussières.

Dans des modes particuliers de réalisation de l'invention, le tronçon présente une forme en tronc de cône, avec une petite base du côté de la première paroi et une grande base du côté de la deuxième paroi. Une telle forme du tronçon permet, lorsqu'une force est exercée sur le joint de protection, de contribuer avantageusement à l'étirement de la deuxième paroi dans son plan.

Dans des formes particulières de réalisation de l'invention, la deuxième paroi du joint de protection peut comporter au moins deux fentes, de préférence croisées. Ainsi, lorsque le joint de protection est en position contrainte, l'orifice créé par la déformation des deux fentes, présente des dimensions supérieures à celle de l'orifice créé par la déformation d'une seule fente.

L'invention est également relative à un ensemble de protection comportant deux joints de protection tels qu'exposés et conformes à au moins l'un de ses modes de réalisation. Les deuxièmes parois respectives des deux joints de protections sont avantageusement agencées pour venir en contact l'une contre l'autre. Chaque joint de protection est destiné à protéger un élément. Les deux éléments protégés respectivement par un joint de protection sont destinés à interagir ensemble.

Un tel ensemble de protection permet, lorsque les deux joints de protection sont mis en contact et soumis à une force exercée perpendiculaire aux deuxièmes parois, de créer, entre lesdits deux éléments, un espace protégé, délimité par les tronçons des deux joints de protection et exempt de poussière. Ainsi, même en cours d'utilisation, les éléments sont protégés par les joints de protection.

L'ensemble de protection permet ainsi avantageusement de protéger deux éléments, autant avant et après leurs utilisations que pendant leurs utilisations.

### Brève description des figures

L'invention sera mieux comprise à la lecture de la description suivante, donnée à titre d'exemple nullement limitatif, et faite en se référant aux figures suivantes :
La figure 1 illustre un joint de protection selon un premier mode de réalisation de l'invention, en position de repos,
La figure 2 illustre le joint de protection de la figure 1, en position contrainte,
La figure 3 représente, en coupe, un ensemble de protection comportant deux joints de protection de la figure 1, les joints de protection étant en position de repos,
La figure 4 illustre, en coupe, l'ensemble de protection de la figure 3, avec les joints de protection en position contrainte,
La figure 5 illustre un autre exemple d'ensemble de protection comportant deux joints de protection selon un deuxième mode de réalisation de l'invention, et dimensionnés pour la protection de plusieurs éléments ; les joint de protection étant représenté en vis-à-vis et en position de repos,
La figure 6 illustre l'ensemble de protection de la figure 5, avec les joints de protection assemblés et en position contrainte.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

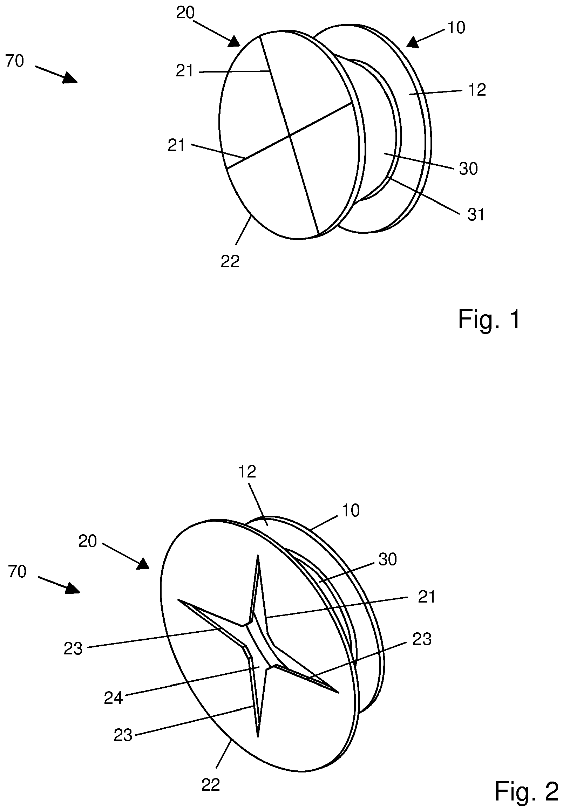

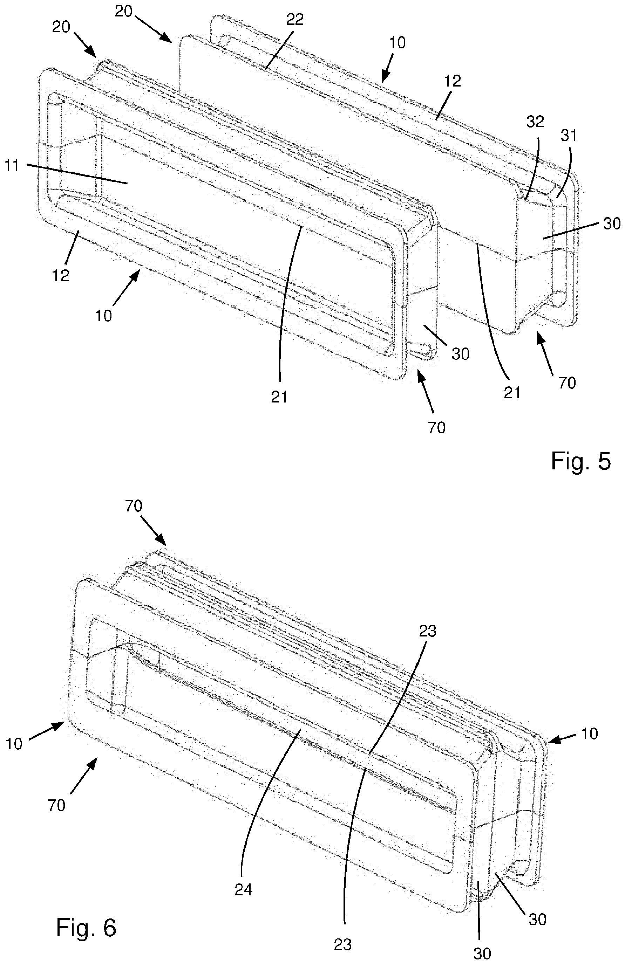

La présente invention concerne un joint de protection 70. Les figures 1 à 4 représentent un premier mode de réalisation du joint de protection 70 et les figures 5 et 6 représentent un deuxième mode de réalisation dudit joint de protection 70. L'invention est décrite dans le contexte particulier d'un de ses domaines d'application préférés dans lequel le joint de protection 70 est destiné à protéger au moins un élément optique. Dans le premier mode de réalisation, le joint de protection 70, indépendamment de sa forme, est destiné à protéger un seul élément optique. Dans le deuxième mode de réalisation, le joint de protection 70, indépendamment de sa forme, est destiné à protéger une pluralité d'éléments optiques. Le joint de protection 70 est configuré pour présenter des dimensions adaptées à la protection d'un nombre prédéfini d'éléments optiques.

Dans l'exemple des figures 5 et 6, le joint de protection est dimensionné pour protéger une pluralité d'éléments optiques, tels que par exemple des lentilles, des sources lumineuses, des photodiodes, agencés préférentiellement en colonne.

Le joint de protection 70 se présente sous la forme d'un corps creux. Le corps creux comporte :
- une première paroi 10,
- une deuxième paroi 20,
- un tronçon 30 reliant la première paroi 10 et la deuxième paroi 20.

La première paroi 10 présente avantageusement une forme générale sensiblement plane. La première paroi comporte préférentiellement une première surface plane. Ladite première surface plane est située du côté opposé au tronçon 30.

La première paroi 10 comporte une ouverture 11. L'ouverture 11 est préférentiellement délimitée par une collerette 12.

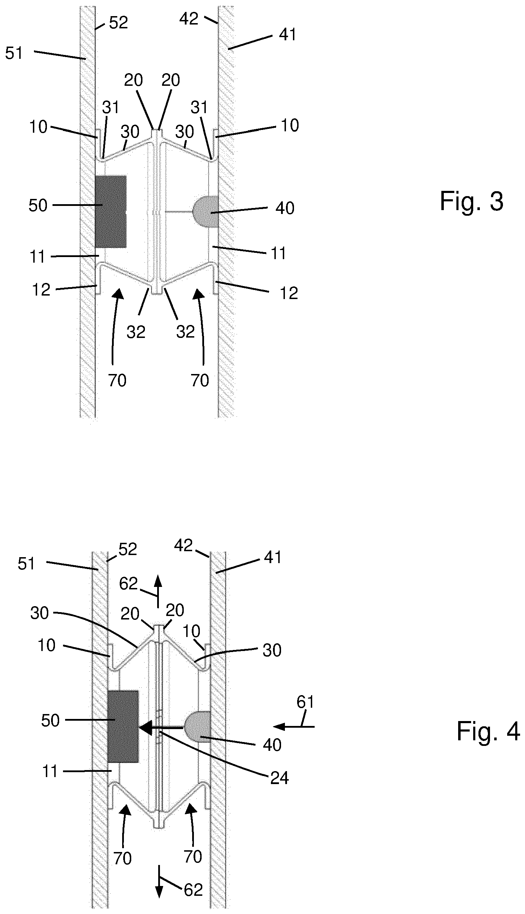

La collerette 12 est préférentiellement destinée à être disposée contre une face d'appui d'un support de l'élément optique à protéger de sorte que l'élément optique est disposé en vis-à-vis de l'ouverture 11 ou dans l'ouverture 11 de la première paroi 10, comme illustré sur la figure 3. En d'autres termes, la première surface de la première paroi 10 est destinée à être disposée contre la face d'appui du support de l'élément optique.

Dans le premier mode de réalisation du joint de protection 70, comme illustré sur les figures 1 et 2, la première paroi 10 présente une section circulaire. Ainsi, l'ouverture 11 est de section circulaire et la collerette 12 de section annulaire.

Dans le deuxième mode de réalisation du joint de protection 70, comme illustré sur la figure 5, la première paroi 10 présente une section rectangulaire. Ainsi, l'ouverture 11 est une ouverture rectangulaire et la collerette 12 se présente sous la forme d'un anneau de forme rectangulaire.

La deuxième paroi 20 est opposée à la première paroi 10.

La deuxième paroi 20 présente avantageusement une forme générale sensiblement plane.

La première paroi comporte préférentiellement une première surface plane. Ladite première surface plane est située du côté opposé au tronçon 30.

De préférence, la deuxième paroi 20 présente une section de forme identique à la forme de la section de la première paroi 10.

Ainsi, dans le premier mode de réalisation du joint de protection 70, la deuxième paroi 20 présente une section circulaire. Dans le deuxième mode de réalisation dudit joint de protection 70, la deuxième paroi 20 présente une section rectangulaire.

Quel que soit le mode de réalisation du joint de protection 70, la deuxième paroi 20 comporte au moins une fente 21. La au moins une fente 21 est traversante dans l'épaisseur de la deuxième paroi 20.

Dans un exemple non limitatif de réalisation, illustré sur les figures 1 et 2, la deuxième paroi 20 comporte deux fentes 21.

Dans un autre exemple non limitatif de réalisation, illustré sur la figure 5, la deuxième paroi 20 comporte une fente 21.

Bien que les fentes 21 sont illustrées sur les figures 1, 2 et 5 et décrites au nombre d'une et deux, le nombre de ces fentes 21 n'est pas limité à ceux décrits et illustrés. Ainsi, il est possible, sans se départir du cadre de l'invention, de réaliser une deuxième paroi à trois, quatre fentes ou plus.

Avantageusement, lorsque la deuxième paroi 20 présente une section circulaire, comme illustré sur les figures 1 et 2, les fentes 21 de la deuxième paroi 20 sont préférentiellement des fentes radiales.

Dans une forme non limitative de réalisation des fentes radiales, chaque fente 21 s'étend radialement jusqu'à une bordure périphérique 22 de la deuxième paroi, comme illustrée sur la figure 1. Les deux fentes radiales 21 divisent équitablement la deuxième paroi 20 en quatre.

Avantageusement, lorsque la deuxième paroi 20 présente une section rectangulaire, comme illustré sur la figure 5, la fente 21 est préférentiellement une fente longitudinale.

Dans une forme non limitative de réalisation de la fente longitudinale, la fente 21 s'étend radialement jusqu'à une bordure périphérique 22 de la deuxième paroi. La fente 21 longitudinale divise équitablement la deuxième paroi 20 en deux.

Le tronçon 30, reliant la première paroi 10 et la deuxième paroi 20, délimite un volume interne creux. En d'autres termes, le joint de protection 70, formé par la première paroi 10, la deuxième paroi 20 et le tronçon 30, présente un volume interne creux unique.

Dans une forme de réalisation, le tronçon 30 présente, quel que soit sa forme, un axe moyen orienté sensiblement perpendiculairement à la première paroi 10 ou à la deuxième paroi 20.

Le tronçon 30 présente avantageusement une forme sensiblement en tronc de cône, avec une petite base 31 du côté de la première paroi 10 et une grande base 32 du côté de la deuxième paroi 20.

Par forme sensiblement en tronc de cône, on entend une forme de section transversale monotone décroissante ou croissante, ici décroissante de la deuxième paroi 20 vers la première paroi 10.

L'expression « tronc de cône » utilisée pour décrire la forme du tronçon 30 est à prendre au sens général englobant toute forme de section du tronc de cône, telle que par exemple une section elliptique, circulaire, carrée, rectangulaire ou polygonale.

De préférence, le tronçon 30 présente une forme de section sensiblement identique à la forme de section de la première paroi 10 ou de la deuxième paroi 20.

L'exemple de tronc de cône du tronçon 30 est illustré et décrit dans le cas d'un tronc de cône de section circulaire pour le premier mode de réalisation, illustré sur les figures 1 à 4.

L'exemple de tronc de cône du tronçon 30 est illustré et décrit dans le cas d'un tronc de cône de section rectangulaire pour le deuxième mode de réalisation, illustré sur les figures 5 et 6.

Le tronçon 30 est ouvert au niveau de la petite base 31 et de la grande base 32.

Le tronçon 30 est agencé de sorte que la petite base 31 est disposée autour de l'ouverture 11 de la première paroi 10.

De préférence, comme illustré sur la figure 3, la section de la petite base 31 du tronçon 30 correspond à la section de l'ouverture 11 de la première paroi 10.

De préférence, comme illustré sur la figure 3, la section de la grande base 32 du tronçon 30 correspond sensiblement à la section de la deuxième paroi 20.

De préférence, le corps creux, c'est-à-dire la première paroi 10, la deuxième paroi 20 et le tronçon 30, est réalisé en une seule pièce monobloc.

Le corps creux est avantageusement réalisé dans un matériau élastique.

Dans un exemple de réalisation, le corps creux est en matériau élastomère, tel que par exemple un matériau à base de silicone ou de caoutchouc.

Ce type de matériau présente avantageusement la propriété de se déformer de manière large tout en restant dans le domaine élastique.

Tout type de matériau capable de se déformer, tout en restant dans le domaine élastique, peut être utilisé pour réaliser le corps creux.

Selon l'invention, le joint de protection 70 peut prendre au moins deux positions.

Dans une première position, dite position de repos, le joint de protection 70 est configuré de telle sorte que la au moins une fente 21 de la deuxième paroi 20 soit fermée.

Par fente fermée, on entend que des bords longitudinaux 23 de la au moins une fente 21 sont jointifs, de sorte que ladite deuxième paroi 20 soit obturée. Aucune poussière ou impureté ne peut traverser la deuxième paroi 20, via la au moins une fente 21, vers le tronçon 30.

Dans une deuxième position, dite position contrainte, le joint de protection 70 est configuré de telle sorte que la au moins une fente 21 de la deuxième paroi 20 soit déformée.

Par fente déformée, on entend que les bords longitudinaux 23 de la fente ne sont plus jointifs.

La deuxième paroi 20 présente alors un orifice 24 délimité par les bords longitudinaux 23 de la au moins une fente.

Le joint de protection passe de la position de repos à la position contrainte, lorsqu'une force est exercée sur le joint de protection. Cette force est préférentiellement exercée dans une direction sensiblement perpendiculaire à la deuxième paroi 20. La force peut s'exercer selon les deux sens de la direction, sans que cela soit restrictif de l'invention.

Lorsqu'une force est exercée sur le joint de protection, la deuxième paroi 20, de part son élasticité, s'étire de son plan, générant ainsi la déformation de la au moins une fente et son ouverture. La forme en tronc de cône du tronçon, avec la grande base 32 côté deuxième paroi, contribue avantageusement à l'étirement de la deuxième paroi dans son plan.

Le choix de la dureté du matériau constituant le corps du joint de protection est préférentiellement dépendant de la force exercée sur la deuxième paroi 20.

Le joint de protection subit une déformation qui reste dans son domaine élastique. Ainsi, dès que la force exercée sur le joint de protection cesse, la deuxième paroi 20 reprend avantageusement seule sa position de repos.

Le joint de protection 70 peut avantageusement être utilisé avec un autre joint de protection pour former un ensemble de protection.

Les figures 3 et 4 illustrent un mode préféré d'utilisation d'un tel ensemble de protection.

Dans ce mode de réalisation, non limitatif, chaque joint de protection de l'ensemble de protection est dimensionné pour protéger un élément, ici optique.

Un joint de protection, dit premier joint de protection, est destiné à protéger par exemple une source lumineuse 40.

Un joint de protection, dit deuxième joint de protection, est destiné à protéger par exemple un photodétecteur 50.

Le photodétecteur 50 est destiné à être agencé en vis-à-vis de la source lumineuse de sorte à recevoir un faisceau lumineux provenant de la source lumineuse 40.

Le premier joint de protection est positionné vis-à-vis de la source lumineuse 40 de sorte que ladite source lumineuse 40 soit disposée au niveau de l'ouverture 11 de la première paroi 10. La collerette 12 de la première paroi 10 est disposée, contre une face d'appui 42 d'un support 41 de la source lumineuse 40. Le premier joint de protection est fixé de manière réversible, ou non réversible, au support 41 de la source lumineuse 40, par la collerette 12 de sa première paroi 10.

De manière équivalente, le deuxième joint de protection est positionné vis-à-vis du photodétecteur 50 de sorte que ledit photorécepteur soit disposé au niveau de l'ouverture 11 de la première paroi 10 dudit deuxième joint de protection. La collerette 12 de la première paroi 10 est disposée, contre une face d'appui 52 d'un support 51 du photodétecteur 50. Le deuxième joint de protection est fixé de manière réversible, ou non réversible, au support 51 du photodétecteur 50, par la collerette 12 de sa première paroi 10.

Lorsque la source lumineuse 40 n'est pas en cours d'utilisation, le premier joint de protection est en position de repos. Le premier joint de protection est alors hermétique aux poussières. Aucune poussière ne peut pénétrer dans le corps creux. La source lumineuse 40 est ainsi protégée des poussières et autres impuretés.

De même, lorsque le photodétecteur 50 n'est pas en cours d'utilisation, le deuxième joint de protection est en position de repos. Le deuxième joint de protection est alors étanche aux poussières et aucune poussière ne peut pénétrer dans le corps creux. Le photodétecteur 50 est ainsi protégé des poussières et autres impuretés.

Lorsqu'il est souhaité établir une liaison optique entre la source lumineuse 40 et le photodétecteur 50, la source lumineuse 40 et le photodétecteur 50 sont disposés l'un en face de l'autre. La deuxième paroi 20 du premier joint de protection est agencée en vis-à-vis de la deuxième paroi 20 du deuxième joint de protection. En d'autres termes, la première surface de la deuxième paroi du premier joint de protection est agencée en vis-à-vis de la première surface de la deuxième paroi du deuxième joint de protection.

Telle que représentée sur la figure 3, la deuxième paroi 20 du premier joint de protection est contre la deuxième paroi 20 du deuxième joint de protection. Chaque joint de protection est en position de repos. Aucune force n'est exercée sur l'un ou l'autre des joints de protection. Le faisceau optique qui serait émis par la source lumineuse 40 ne peut alors traverser la deuxième paroi 20 du premier joint de protection. Le photodétecteur 50 ne peut pas recevoir le faisceau optique émis par la source lumineuse 40. Dans un exemple de réalisation, la source lumineuse et le photodétecteur sont distants l'un de l'autre de quelques centimètres, par exemple au maximum 5 cm. Chaque joint de protection est dimensionné en conséquence.

Telle qu'illustrée sur la figure 4, une force est à présent exercée sur les joints de protection. Cette force est représentée par la flèche 61, à titre d'exemple non limitatif. Cette force est appliquée dans une direction sensiblement perpendiculaire aux deuxièmes parois de chaque joint de protection.

Lorsque cette force est exercée, lesdites deuxièmes parois de chaque joint de protection s'étirent dans leur plan, comme illustré par les deux flèches 62. En s'étirant, les fentes desdites deuxièmes parois de chaque joint de protection s'ouvrent et dégagent un orifice 24 dans lesdites deuxièmes parois. Lesdits orifices 24 respectifs de chaque deuxième paroi autorise alors le passage du faisceau optique émis par la source lumineuse 40 en direction du photodétecteur 50.

Un tel ensemble de protection présente un double avantage. Lorsque la source lumineuse 40 et le photodétecteur 50 ne sont pas utilisés, chaque joint de protection protège son élément optique des poussières, indépendamment de l'autre. Lorsque les deux joints de protection sont mis en contact et qu'une force est exercée sur eux, la liaison optique est réalisée dans le volume creux de chaque joint de protection. Aucune poussière ne peut pénétrer à l'intérieur des joints de protection.

L'ensemble de protection permet ainsi avantageusement de protéger deux éléments optiques, autant avant et après leurs utilisations que pendant leurs utilisations.

Les figures 5 et 6 illustrent un autre exemple d'ensemble de protection.

Dans cet exemple, chaque joint de protection est dimensionné pour protéger une pluralité d'éléments optiques (non représentés) agencés en colonne. Un premier joint de protection est par exemple destiné à protéger une pluralité de sources lumineuses. Un deuxième joint de protection est par exemple destiné à protéger une pluralité de photodétecteurs.

La figure 5 représente les deux joints de protection en position de repos. Les deuxièmes parois des deux joints de protection sont disposées en vis-à-vis l'une de l'autre. La fente longitudinale de chaque deuxième paroi est fermée.

La figure 6 représente les deux joints de protection assemblés et en position contrainte. Les deuxièmes parois des deux joints de protection sont l'une contre de l'autre. Plus précisément, la première surface de la deuxième paroi du premier joint de protection est contre la première surface de la deuxième paroi du deuxième joint de protection. On distingue clairement sur cette figure l'ouverture des fentes longitudinales de chaque deuxième paroi dégageant un orifice 24 dans chaque deuxième paroi permettant le passage de faisceaux optiques émis par les sources lumineuses vers les photodétecteurs associés.

La présente invention ne se limite pas à un joint de protection avec une première paroi 10, un tronçon 30 et une deuxième paroi 20 de même section, comme illustré sur les figures. Un joint de protection peut comporter une première paroi 10, un tronçon 30 et une deuxième paroi 20 de sections différentes. Par exemple, un joint de protection peut comporter une première paroi 10 présentant une section circulaire, une deuxième paroi 20 présentant une section carrée et un tronçon 30 en forme de tronc de cône de section elliptique.

De même, la présente invention ne se limite pas à un ensemble de protection comportant deux joints de protection identiques, comme illustré sur les figures 3 et 4. Les joints de protection formant l'ensemble de protection peuvent être différents. L'homme du métier est en mesure d'adapter l'invention à des formes et agencements non décrits.

## Revendications

1. Joint de protection (70) se présentant sous la forme d'un corps creux comprenant une première paroi (10) de forme sensiblement plane, une deuxième paroi (20) de forme sensiblement plane et opposée à la première paroi (10), et un tronçon (30) entre la première paroi (10) et la deuxième paroi (20), ladite première paroi comportant une ouverture (11), ladite deuxième paroi comportant au moins une fente (21), ledit joint de protection étant configuré pour passer, lorsqu'une force est exercée sur la deuxième paroi (20), dans une direction perpendiculaire à ladite deuxième paroi, d'une position de repos, dans laquelle la au moins une fente (21) est fermée, à une position contrainte, dans laquelle la au moins une fente (21) est déformée, dégageant une ouverture dans la deuxième paroi (20).

2. Joint de protection (70) selon la revendication 1 dans lequel le corps creux est réalisé dans un matériau élastique.

3. Joint de protection (70) selon l'une des revendications précédentes dans lequel ledit joint de protection est configuré pour revenir en position de repos lorsque la force n'est plus exercée sur la deuxième paroi (20).

4. Joint de protection (70) selon l'une des revendications précédentes dans lequel le tronçon (30) présente une forme en tronc de cône, avec une petite base (31) du côté de la première paroi (10) et une grande base (32) du côté de la deuxième paroi (20).

5. Joint de protection (70) selon l'une des revendications précédentes dans lequel la deuxième paroi (20) comporte deux fentes (21) croisées.

6. Ensemble de protection comportant deux joints de protection (70) selon l'une des revendications 1 à 5, les deuxièmes parois (20) desdits deux joints de protections étant agencées pour venir en contact l'une contre l'autre.

## Patentansprüche

1. Schutzdichtung (70), die sich in Form eines Hohlkörpers zeigt, der eine erste Wand (10) von im Wesentlichen ebener Form, eine zweite Wand (20) von im Wesentlichen ebener Form und der ersten Wand (10) gegenüberliegend, und einen Abschnitt (30) zwischen der ersten Wand (10) und der zweiten Wand (20) umfasst, wobei die erste Wand eine Öffnung (11) umfasst, wobei die zweite Wand mindestens einen Schlitz (21) umfasst, wobei die Schutzdichtung so konfiguriert ist, dass sie, wenn eine Kraft auf die zweite Wand (20) in einer Richtung senkrecht zur zweiten Wand ausgeübt wird, von einer Ruheposition, in der der mindestens eine Schlitz (21) geschlossen ist, in eine gespannte Position übergeht, in der der mindestens eine Schlitz (21) verformt ist, wodurch er eine Öffnung in der zweiten Wand (20) freigibt.

2. Schutzdichtung (70) nach Anspruch 1, wobei der Hohlkörper aus einem elastischen Material hergestellt ist.

3. Schutzdichtung (70) nach einem der vorstehenden Ansprüche, wobei die Schutzdichtung so konfiguriert ist, dass sie in die Ruheposition zurückkehrt, wenn die Kraft nicht mehr auf die zweite Wand (20) ausgeübt wird.

4. Schutzdichtung (70) nach einem der vorstehenden Ansprüche, wobei der Abschnitt (30) eine Kegelstumpfform aufweist, mit einer kleinen Basis (31) auf der Seite der ersten Wand (10) und einer großen Basis (32) auf der Seite der zweiten Wand (20).

5. Schutzdichtung (70) nach einem der vorstehenden Ansprüche, wobei die zweite Wand (20) zwei sich kreuzende Schlitze (21) umfasst.

6. Schutzanordnung, die zwei Schutzdichtungen (70) nach einem der Ansprüche 1 bis 5 umfasst, wobei die zweiten Wände (20) der zwei Schutzdichtungen so angeordnet sind, dass sie aneinander in Kontakt gelangen.

## Claims

1. Protective seal (70) in the form of a hollow body comprising a first wall (10) substantially planar in form, a second wall (20) substantially planar in form and opposite to the first wall (10), and a portion (30) between the first wall (10) and the second wall (20), said first wall including an opening (11), said second wall including at least one slot (21), said protective seal being configured to pass, when a force is exerted on the second wall (20), in a direction perpendicular to said second wall, from a rest position, in which the at least one slot (21) is closed, to a constrained position, in which the at least one slot (21) is deformed, leaving clear an opening in the second wall (20).

2. Protective seal (70) according to claim 1, wherein the hollow body is produced from an elastic material.

3. Protective seal (70) according to one of the preceding claims, wherein said protective seal is configured to return to the rest position when the force is no longer being exerted on the second wall (20).

4. Protective seal (70) according to one of the preceding claims, wherein the portion (30) has a shape in a truncated cone, with a small base (31) on the same side as the first wall (10) and a large base (32) on the same side as the second wall (20).

5. Protective seal (70) according to one of the preceding claims, wherein the second wall (20) includes two intersecting slots (21).

6. Protective assembly comprising two protective seals (70) according to one of claims 1 to 5, the second walls (20) of said two protective seals being arranged to come into contact one against the other.
